# FASCICULE DE BREVET EUROPEEN

(11) **EP 3 158 308 B1**
(45) Date de publication et mention de la délivrance du brevet: **29.01.2020**
(21) Numéro de dépôt: 15733823.7
(22) Date de dépôt: 12.06.2015
(51) Int. Cl.: G01M 15/14, F02K 9/96

(54) **SYSTÈME AMÉLIORE POUR LA RÉALISATION D'ESSAIS SUR UN DIVERGENT D'ENGIN SPATIAL**
VERBESSERTES SYSTEMS ZUR PRÜFUNG DER DÜSE EINER RAUMFAHRT MOTOR
IMPROVED SYSTEM FOR TESTING NOZZLES OF SPACE ENGINES

(30) Priorité: 23.06.2014 FR 1455778
(43) Date de publication de la demande: 26.04.2017
(73) Titulaire: SAFRAN AIRCRAFT ENGINES, 75015 Paris (FR)
(72) Inventeur: PYRE, Alain, F-27950 Saint Just (FR)
(74) Mandataire: Cabinet Beau de Loménie
(86) Numéro de dépôt international: PCT/FR2015/051564
(87) Numéro de publication internationale: WO 2015/197939

(56) Documents cités:
- RU-C2- 2 225 527
- US-A- 4 768 391

## Description

### DOMAINE TECHNIQUE GENERAL

La présente invention concerne le domaine des bancs d'essais pour les divergents de moteurs d'engins spatiaux.

### ETAT DE L'ART

La réalisation d'essais sur les divergents de moteurs d'engins spatiaux pour la simulation de conditions de vol est nécessaire afin de garantir la bonne tenue des divergents lors de leur utilisation. En revanche, les tests au sol ne permettent pas de reproduire l'ensemble des conditions d'utilisation lors du vol de l'engin spatial, qui diffèrent fortement par rapport à des appareils conventionnels, et nécessitent donc soit des essais spécifiques soit des simulations numériques parfaitement représentatives
Les simulations numériques de ce type sont très contraignantes et nécessitent des modélisations théoriques et des efforts considérables. Parfois même, certaines sollicitations physiques existant en vol ne peuvent pas être modélisées de façon réaliste.
Les simulations réalisées sur les moteurs pour en mesurer la poussée, comme par exemple présenté dans le document RU 2225527, visent quant à elles au contraire à immobiliser le divergent afin de maintenir le moteur aligné selon une direction axiale, et se contentent donc de le maintenir en position sans y appliquer des contraintes localisées de manière à simuler les conditions de vol. Dans ce document RU 2225527, le comportement du divergent en vol n'est donc pas pris en compte ; seule la poussée axiale du moteur est étudiée.

Il existe donc un besoin de dispositifs permettant de vérifier expérimentalement le bon comportement mécanique de divergents de moteurs d'engins spatiaux.

La présente invention vise ainsi à remédier au moins partiellement à cette problématique.

### PRESENTATION DE L'INVENTION

A cet effet, la présente invention propose un système comprenant un banc d'essai pour divergent de moteur d'engin spatial et un ensemble comprenant un divergent de moteur d'engin spatial,
Ledit ensemble comprenant une extrémité proximale et une extrémité distale,
le banc d'essai comprenant un châssis muni de moyens de fixation de l'extrémité proximale de l'ensemble comprenant le divergent au châssis, l'ensemble étant caractérisé en ce que le banc d'essai comprend des actionneurs adaptés pour appliquer localement des efforts sur le divergent, lesdits efforts simulant des conditions de vol du divergent.
Les actionneurs sont typiquement adaptés pour appliquer localement des contraintes dans une section de tête du divergent, ladite section de tête du divergent étant adjacente à l'extrémité distale.

Les actionneurs comprennent par exemple des vérins adaptés pour exercer un effort de traction sur le divergent via des câbles.
Les actionneurs comprennent alors typiquement des renvois d'angle disposés entre le divergent et les vérins, de manière à ce que les câbles soient orientés perpendiculairement à la surface d'application des contraintes.
Selon une autre variante, les actionneurs comprennent des vérins adaptés pour exercer un effort de compression sur le divergent via des tiges rigides.

L'ensemble comprend typiquement au moins un couple d'actionneurs disposés de part et d'autre d'un axe du divergent, adaptés pour appliquer des contraintes symétriques par rapport audit axe.

En variante, les actionneurs sont disposés de manière à appliquer des efforts asymétriques par rapport à un axe de l'ensemble comprenant le divergent.
Les actionneurs peuvent également être disposés de manière à appliquer des efforts selon une direction axiale de l'ensemble comprenant le divergent.

L'invention concerne également un procédé de test d'un ensemble comprenant un divergent au moyen d'un système tel que présenté précédemment, dans lequel ledit ensemble comprend une chambre de combustion, ledit procédé de test étant réalisé alors que la chambre de combustion est en fonctionnement.
En variante, ledit procédé de test est réalisé alors que la chambre de combustion est à l'arrêt.

### PRESENTATION DES FIGURES

D'autres caractéristiques, buts et avantages de l'invention ressortiront de la description qui suit, qui est purement illustrative et non limitative, et qui doit être lue en regard des figures annexées, sur lesquelles :
- Les figures 1A et 1B présentent deux vues d'un système selon un aspect de l'invention ;
- Les figures 2A et 2B présentent une variante d'un système selon un aspect de l'invention ;
- Les figures 3A et 3B présentent une autre variante d'un système selon un aspect de l'invention ;
- Les figures 4A et 4B présentent un autre mode de réalisation particulier d'un système selon un aspect de l'invention ;
- Les figures 5A et 5B présentent une variante du mode de réalisation présenté sur les figures 4A et 4B.

Sur l'ensemble des figures, les éléments en commun sont repérés par des références numériques identiques.

### DESCRIPTION DETAILLEE

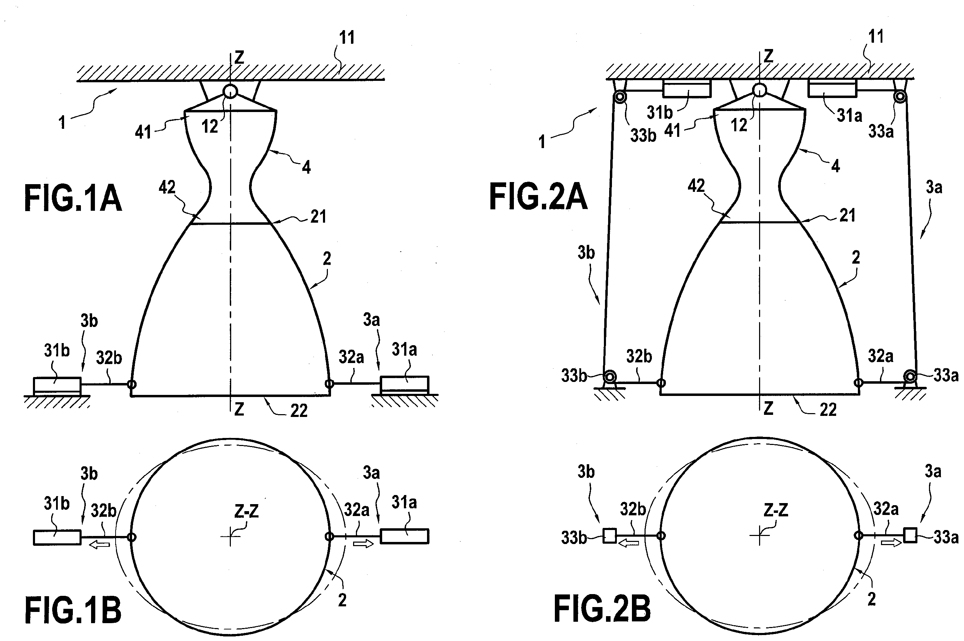

Les figures 1A et 1B présentent deux vues d'un système selon un aspect de l'invention.
Le système présenté comprend un banc d'essai 1 et un ensemble comprenant un divergent de moteur d'engin spatial.

Dans le mode de réalisation représenté, l'ensemble comprenant un divergent comprend un divergent 2 présentant une extrémité proximale 21 et une extrémité distale 22, et une chambre de combustion 4 présentant une extrémité proximale 41 et une extrémité distale 22.
L'extrémité distale 22 correspond à l'extrémité libre du divergent lorsqu'il est monté sur un moteur d'engin spatial, tandis que l'extrémité proximale 21 du divergent 2 est l'extrémité du divergent 2 reliée à la chambre de combustion 4. La chambre de combustion 4 présente également une extrémité proximale 41, et une extrémité distale 42 par laquelle elle est reliée à l'extrémité proximale 21 du divergent 2.
Le divergent 2 s'étend selon un axe Z-Z, et présente typiquement une symétrie de révolution autour de cet axe.
On définit une section de tête du divergent 2, adjacente à l'extrémité distale 22 du divergent 2, correspondant par exemple à 20% du divergent, mesuré à partir de l'extrémité distale 22 selon l'axe Z-Z, ou encore 2 % du divergent, mesuré à partir de l'extrémité distale 22 selon l'axe Z-Z.

Différents types de divergents peuvent être utilisés, l'exemple présenté sur les figures est purement illustratif afin de permettre une meilleure compréhension de l'invention.

Le banc d'essai 1 comprend un châssis 11 fixe, muni de moyens de fixation 12 adaptés pour engager l'extrémité proximale de l'ensemble comprenant un divergent, c'est-à-dire dans l'exemple présenté, l'extrémité proximale 41 de la chambre de combustion 4. De manière alternative, l'extrémité proximale 21 du divergent 2 peut être engagée par les moyens de fixation 12, dans le cas où l'ensemble comprenant le divergent 2 ne comprend pas la chambre de combustion 4.Les moyens de fixation 12 peuvent être de divers types, et par exemple immobiliser l'ensemble comprenant le divergent 2 par rapport au châssis 11, ou permettre un ou plusieurs degrés de liberté de l'ensemble comprenant le divergent 2 par rapport au châssis 11, par exemple un ou plusieurs degrés de liberté en rotation.

Le banc d'essai 3 comprend également des actionneurs 3, adaptés pour appliquer localement des efforts sur le divergent 2.
Les actionneurs 3 sont typiquement configurés de manière à exercer un effort de compression ou un effort de traction sur le divergent 2.
Les actionneurs 3 comprennent typiquement un ou plusieurs couples d'actionneurs configurés de manière à appliquer des efforts symétriques par rapport à l'axe Z-Z du divergent 2, ou des efforts non symétriques par rapport à l'axe Z-Z du divergent 2, la configuration des efforts dépendant des charges que l'on souhaite simuler.

Dans le mode de réalisation représenté sur les figures 1A et 1B, les actionneurs 3 comprennent un couple de deux actionneurs 3a et 3b, disposés symétriquement par rapport à l'axe Z-Z du divergent 2.

Ces actionneurs 3a et 3b comprennent chacun un vérin, respectivement 31a et 31b, associé à un câble, respectivement 32a et 32b, pour exercer un effort de traction sur le divergent tendant à son ovalisation. Les vérins 31a et 31b sont montés sur le châssis 11 du banc d'essai 1, sensiblement au niveau d'une section d'application des contraintes sur le divergent 2.
On représente en effet sur la figure 1B en traits discontinus un exemple de déformation de l'extrémité distale 22 du divergent 2 sous l'effet des efforts de traction appliqués par les actionneurs 3a et 3b.

Les efforts appliqués par les actionneurs 3 sont calculés de manière à simuler des conditions de vol du divergent, et notamment les différentes contraintes auxquelles est soumis le divergent 2 lors des différentes phases d'un vol d'engin spatial, sous différentes phases de vol.

Les actionneurs 3 peuvent comprendre d'autres éléments permettant d'appliquer des charges mécaniques, et ne se limitent pas à des vérins. On peut par exemple utiliser des actionneurs électriques ou des systèmes comprenant des masses variables.

Les actionneurs 3, et notamment les moyens d'application des efforts, ici les vérins 31, sont pilotés en termes d'effort, et non pas en termes de déplacement. Ainsi, les vibrations, dilatations et jeux éventuels du système n'affectent pas les contraintes appliquées.

Bien que les efforts soient appliqués localement sur le divergent 2, les contraintes qui en résultent s'uniformisent rapidement dans la structure du divergent 2.
En effet, cette uniformisation des contraintes locales est détaillée par le principe de Saint-Venant. D'après ce principe, dans le cas d'une poutre, l'uniformisation d'une contrainte appliquée en un point a lieu après une distance de l'ordre de grandeur de la dimension transversale de la poutre.
Ainsi, en appliquant des efforts à proximité de l'extrémité distale 22 du divergent 2, par exemple dans la section de tête du divergent 2, les contraintes qui en résultent dans la partie supérieure du divergent, correspondant par exemple à 50%, 40%, 30% ou 0% de la hauteur du divergent 2 à partir de l'extrémité proximale 21 sont réparties uniformément. Ainsi, dès que l'on s'écarte légèrement des points d'application des efforts, le divergent 2 se comporte de la même manière que s'il s'agissait de charges réelles, appliquées par les champs de pression interne et/ou externe au divergent 2.

Les figures 2A et 2B présentent une variante du mode de réalisation représenté sur les figures 1A et 1B.
Dans ce mode de réalisation, les actionneurs 3 comprennent un ensemble de poulies réalisant des renvois d'angles 33, ce qui permet d'orienter les câbles 32 par rapport aux vérins 31 des actionneurs 3 et par rapport au divergent 2, et permet donc une plus grande latitude pour le positionnement des vérins 31, tout en permettant de modifier le moment de flexion, la poussée axiale et les efforts circonférentiels appliqués au divergent en modifiant la position des renvois d'angles 33.

Dans le mode de réalisation représenté sur les figures 2A et 2B, on voit que le positionnement des actionneurs 3a et 3a et notamment de leurs vérins respectifs 31a et 31b sont distincts de la configuration présentée sur les figures 1A et 1B ; en revanche, les renvois d'angles 33a et 33b permettent d'obtenir des contraintes similaires.

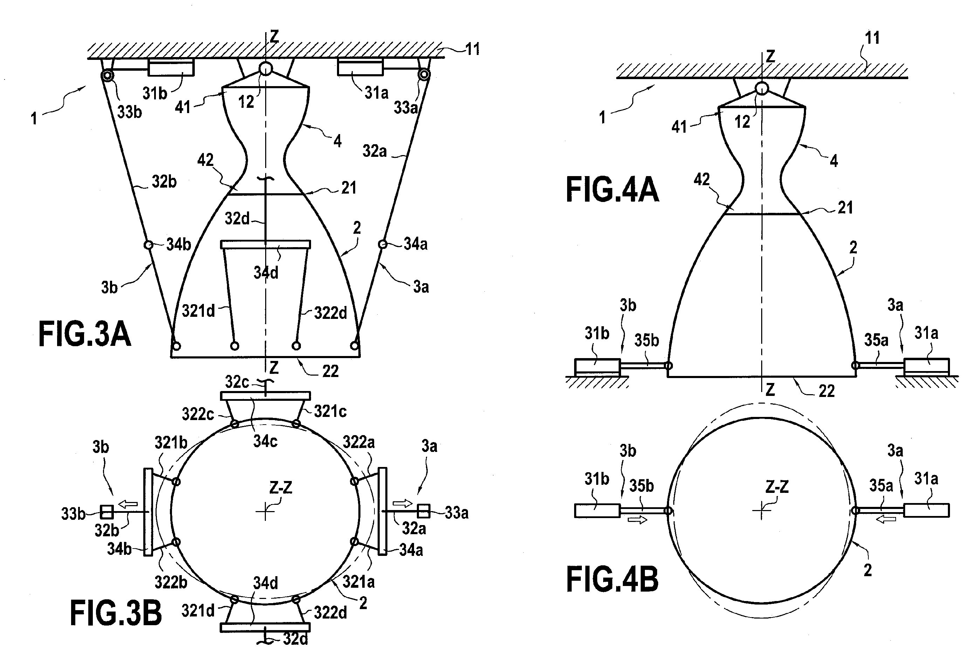

Les figures 3A et 3B présentent une autre variante d'un ensemble tel que présenté précédemment.
Dans ce mode de réalisation, les actionneurs 3 comprennent deux paires d'actionneurs : deux actionneurs 3a et 3b disposés parallèlement par rapport à l'axe Z-Z, et deux actionneurs 3c et 3d disposés parallèlement par rapport à l'axe Z-Z. Ces différents actionneurs 3a à 3d sont typiquement décalés de 90° autour de l'axe Z-Z.

L'utilisation de plusieurs couples d'actionneurs permet d'appliquer des efforts selon différentes directions, et ne se limite donc pas à une unique direction d'ovalisation comme c'est le cas dans les modes de réalisation présentés sur les figures 1A, 1B, 2A et 2B.
Les différents actionneurs, et notamment les actionneurs d'un même couple ne sont pas nécessairement disposés parallèlement par rapport à l'axe Z-Z. D'autres configurations sont possibles, avec un nombre quelconque d'actionneurs, répartis régulièrement ou non autour du divergent 2.
Une application non symétrique des efforts peut par exemple simuler expérimentalement l'effet d'une dissymétrie de pression dans le bas du divergent 2.

Sur la figure 3B, on représente un exemple d'ovalisation dans lequel seuls les actionneurs 3a et 3b appliquent un effort sur le divergent ; l'ovalisation obtenue est donc similaire à celle représentée sur les figures 1A et 1B. On peut notamment faire varier la direction de cette ovalisation en appliquant des efforts via le second couple d'actionneurs 3c et 3d.
Dans le mode de réalisation représenté sur les figures 3A et 3B, en plus d'une ovalisation, les actionneurs 3 appliquent également un moment de flexion et un effort de compression au divergent 2, simulant par exemple sa poussée.

Par ailleurs, les différents actionneurs comprennent chacun une poutre ou une structure 34 à laquelle est fixé le câble 32, typiquement au milieu de la poutre 34. La poutre 34 comprend deux câbles de liaison 321 et 322, typiquement reliés à ses deux extrémités opposées, et reliés chacun au divergent 2. Chacun des actionneurs 3a, 3b, 3c et 3d est ainsi relié au divergent 2 par deux points de contact via les câbles de liaison.

Par ailleurs, dans ce mode de réalisation, les câbles 32 et câbles de liaison 321 et 322 pour l'application des efforts sur le divergent ne sont pas perpendiculaires à l'axe Z-Z du divergent 2, ce qui permet de modifier le moment de flexion, la poussée axiale et l'effort circonférentiel appliqués au divergent 2 comme indiqué précédemment.

Les figures 4A et 4B présentent une autre variante du mode de réalisation présenté sur les figures 1A et 1B, dans laquelle les câbles 32 sont remplacés par des tiges 35 rigides actionnées par les vérins 31.
Les actionneurs 3a et 3b appliquent donc ici un effort en compression sur le divergent 2, et non plus en traction comme c'était le cas sur les figures précédentes.
L'ovalisation s'effectue selon une direction perpendiculaire à celle observée sur les modes de réalisation des figures 1A et 1B.

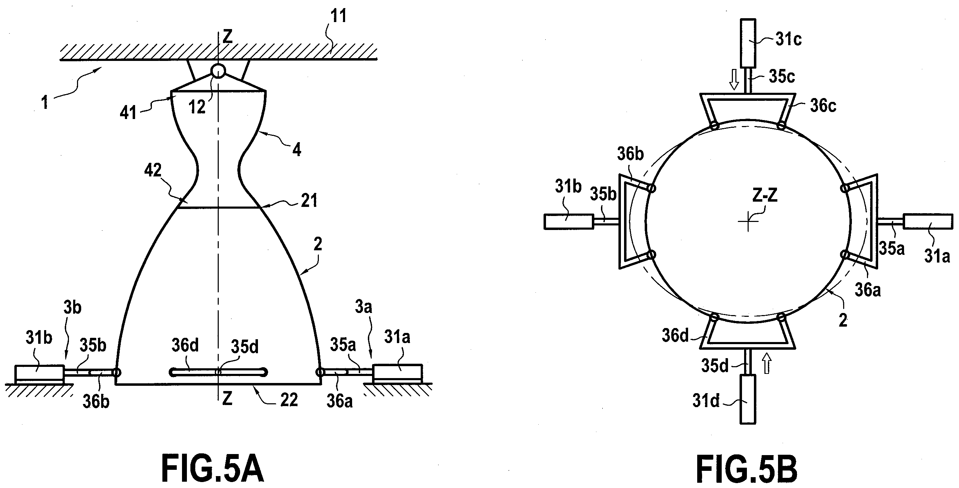

Les figures 5A et 5B sont une autre variante du mode de réalisation présenté sur les figures 4A et 4B, comprenant deux couples d'actionneurs décalés de 90° ; un premier couple d'actionneurs 3a et 3b, et un second couple d'actionneurs 3c et 3d.
Les actionneurs 3 comprennent ici également des tiges rigides adaptées pour appliquer un effort de compression sur le divergent 2.
Dans ce mode de réalisation, les tiges 35 comprennent une extrémité formant une fourche 36 présentant deux branches venant en appui contre le divergent 2. Chacun des actionneurs 3a, 3b, 3c et 3d est ainsi au contact du divergent 2 via les deux branches de sa fourche 36.
Sur la figure 5B, on représente un exemple d'ovalisation dans lequel seuls les actionneurs 3c et 3d appliquent un effort sur le divergent. Comme pour la figure 3C, on peut notamment faire varier la direction de cette ovalisation en appliquant des efforts via l'autre couple d'actionneurs 3a et 3b. On poeut par exemple incliner les actionneurs 3 pour ajouter à l'effet d'ovalisation des effets de chargement axial et de moments de flexion.

Pour les modes de réalisation représentés sur les figures 4A, 4B, 5A et 5B, l'utilisation de tiges 35 permet d'appliquer des efforts en compression sur le divergent 2 ; les tiges 35 peuvent alors simplement venir en appui contre le divergent 2.
On peut également relier les tiges 35 au divergent 2 via des liaisons permettant en outre d'appliquer des efforts en traction sur le divergent, par exemple au moyen de liaisons de type rotule ou linéaire annulaire.

Le système présenté permet ainsi au moyen de différents actionneurs de simuler les contraintes auxquelles est soumis un divergent de moteur d'engin spatial au cours d'un vol, de manière expérimentale, sans nécessiter des efforts de modélisation conséquents et en conservant un coût limité.

Le système proposé permet de plus une latitude importante sur l'application des efforts, que ce soit en termes de points d'application ou en termes de moyens d'application de ces efforts.
Des efforts symétriques ou asymétriques peuvent ainsi être appliqués, dans différentes zones du divergent 2. Des efforts ayant des fréquences variables peuvent également être appliqués. Plusieurs types d'efforts peuvent également être appliqués simultanément, pour simuler les différentes conditions d'utilisation. Des efforts axiaux peuvent également être appliqués sur le divergent, simulant notamment la poussée dans le vide lors du fonctionnement.

Le système proposé permet en outre d'effectuer des tests allant jusqu'à la rupture du divergent 2, par exemple essais de flambage ou d'instabilité plastique, sans que cela n'entraîne la perte d'autres éléments comme cela serait le cas pour un essai d'un engin spatial complet.
Par ailleurs, le système proposé peut être utilisé dans une atmosphère contrôlée, notamment sous vide, afin de reproduire certaines conditions d'utilisation du divergent 2.

Le système permet également de simuler des conditions d'utilisation d'un divergent 2, et donc d'analyser l'impact de déformations ou de défauts de fabrication sur la tenue du divergent à ces conditions d'utilisation. Les déformations peuvent alors par exemple être réalisées préalablement à l'installation de l'ensemble comprenant le divergent 2 sur le banc d'essai 1, ou être réalisées par des actionneurs 3 adaptés.

Le système proposé peut être utilisé notamment dans les conditions suivantes :
- Lorsque le moteur fonctionne et que le divergent voit les gaz chauds de combustion, ce qui permet de déterminer le comportement du divergent 2 dans les conditions réelles de fonctionnement notamment en matière de température, de pression et de déformée.
- Lorsque le moteur ne fonctionne pas ; cela permet par exemple de caractériser des raideurs de divergent 2, voire de le pré-déformer à un niveau souhaité, de manière à vérifier ensuite en fonctionnement (à feu) l'impact d'une telle déformation, par exemple pour simuler les déformations maximales envisageables suite aux tolérances de fabrication ou pour évaluer l'impact d'une anomalie s'écartant de ces tolérances.

Le système proposé peut être appliqué pour les divergents de moteurs fusées à ergols liquides ou à poudre, aux divergents de moteurs d'étages inférieurs ou supérieurs de lanceurs spatiaux, aux divergents métalliques ou composites, aux divergents refroidis ou non refroidis.

## Revendications

1. Système comprenant un banc d'essai (1) et ensemble (2, 4) comprenant un divergent (2) de moteur d'engin spatial,
l'ensemble présentant le divergent comprenant une extrémité proximale (41) et une extrémité distale (22),
le banc d'essai (1) comprenant un châssis (11) muni de moyens de fixation (12) de l'extrémité proximale (41) de l'ensemble comprenant le divergent (2) au châssis (11),
l'ensemble étant **caractérisé en ce que** le banc d'essai (1) comprend des actionneurs (3) adaptés pour appliquer localement des efforts sur le divergent (2), lesdits efforts simulant des conditions de vol du divergent (2).

2. Système selon la revendication 1, dans lequel les actionneurs (3) sont adaptés pour appliquer localement des efforts dans une section de tête du divergent (2), ladite section de tête du divergent (2) étant adjacente à l'extrémité distale (22) de l'ensemble.

3. Système selon l'une des revendications 1 ou 2, dans lequel lesdits actionneurs (3) comprennent des vérins (31) adaptés pour exercer un effort de traction sur le divergent (2) via des câbles (32).

4. Système selon la revendication 3, dans lequel les actionneurs (3) comprennent des renvois d'angle (33) disposés entre le divergent (2) et les vérins (31), de manière à ce que les câbles (32) soient orientés perpendiculairement à la surface d'application des efforts.

5. Système selon l'une des revendications 1 ou 2, dans lequel lesdits actionneurs (3) comprennent des vérins (31) adaptés pour exercer un effort de compression sur le divergent via des tiges (35) rigides.

6. Système selon l'une des revendications 1 à 5, comprenant au moins un couple d'actionneurs (3a et 3b et/ou 3c et 3d) disposés de part et d'autre d'un axe (Z-Z) du divergent (2), adaptés pour appliquer des efforts symétriques par rapport audit axe (Z-Z) du divergent (2).

7. Système selon l'une des revendications 1 à 5, dans lequel les actionneurs (3) sont disposés de manière à appliquer des efforts asymétriques par rapport à un axe (Z-Z) de l'ensemble comprenant le divergent (2).

8. Système selon l'une des revendications 1 à 7, dans lequel les actionneurs (3) sont disposés de manière à appliquer des efforts selon une direction axiale de l'ensemble comprenant le divergent (2).

9. Procédé de test d'un ensemble comprenant un divergent au moyen d'un système selon l'une des revendications 1 à 8, dans lequel ledit ensemble comprend une chambre de combustion (4), ledit procédé de test étant réalisé alors que la chambre de combustion (4) est en fonctionnement.

10. Procédé de test d'un ensemble comprenant un divergent au moyen d'un système selon l'une des revendications 1 à 8, dans lequel ledit ensemble comprend une chambre de combustion (4), ledit procédé de test étant réalisé alors que la chambre de combustion (4) est à l'arrêt.

## Patentansprüche

1. System, umfassend einen Prüfstand (1) und eine Anordnung (2, 4), die eine Expansionsdüse (2) für einen Raumfahrzeugmotor umfasst,
wobei die die Expansionsdüse aufweisende Anordnung ein proximales Ende (41) und ein distales Ende (22) umfasst,
wobei der Prüfstand (1) einen Rahmen (11) umfasst, der mit Mitteln zum Befestigen (12) des proximalen Endes (41) der die Expansionsdüse (2) umfassenden Anordnung an dem Rahmen (11) versehen ist,
wobei die Anordnung **dadurch gekennzeichnet ist, dass** der Prüfstand (1) Aktuatoren (3) umfasst, die geeignet sind, Kräfte lokal auf die Expansionsdüse (2) aufzubringen, wobei die Kräfte die Flugbedingungen der Expansionsdüse (2) simulieren.

2. System gemäß Anspruch 1, wobei die Aktuatoren (3) geeignet sind, Kräfte lokal in einem Kopfabschnitt der Expansionsdüse (2) aufzubringen, wobei der Kopfabschnitt der Expansionsdüse (2) an das distale Ende (22) der Anordnung angrenzt.

3. System gemäß einem der Ansprüche 1 oder 2, wobei die Aktuatoren (3) Zylinder (31) umfassen, die geeignet sind, über Kabel (32) eine Zugkraft auf die Expansionsdüse (2) auszuüben.

4. System gemäß Anspruch 3, wobei die Aktuatoren (3) Winkelgetriebe (33) umfassen, die zwischen der Expansionsdüse (2) und den Zylindern (31) angeordnet sind, sodass die Kabel (32) senkrecht zur Kraftaufbringungsfläche ausgerichtet sind.

5. System gemäß einem der Ansprüche 1 oder 2, wobei die Aktuatoren (3) Zylinder (31) umfassen, die geeignet sind, über starre Stangen (35) eine Druckkraft auf die Expansionsdüse auszuüben.

6. System gemäß einem der Ansprüche 1 bis 5, umfassend mindestens ein Paar von Aktuatoren (3a und 3b und/oder 3c und 3d), die auf beiden Seiten einer Achse (Z-Z) der Expansionsdüse (2) angeordnet und geeignet sind, symmetrische Kräfte in Bezug auf die Achse (Z-Z) der Expansionsdüse (2) aufzubringen.

7. System gemäß einem der Ansprüche 1 bis 5, wobei die Aktuatoren (3) so angeordnet sind, dass sie asymmetrische Kräfte in Bezug auf eine Achse (Z-Z) der die Expansionsdüse (2) umfassenden Anordnung aufbringen.

8. System gemäß einem der Ansprüche 1 bis 7, wobei die Aktuatoren (3) so angeordnet sind, dass sie Kräfte in einer axialen Richtung der die Expansionsdüse (2) umfassenden Anordnung aufbringen.

9. Verfahren zum Testen einer eine Expansionsdüse umfassenden Anordnung mittels eines Systems gemäß einem der Ansprüche 1 bis 8, wobei die Anordnung eine Brennkammer (4) umfasst und das Testverfahren durchgeführt wird, während die Brennkammer (4) in Betrieb ist.

10. Verfahren zum Testen einer eine Expansionsdüse umfassenden Anordnung mittels eines Systems gemäß einem der Ansprüche 1 bis 8, wobei die Anordnung eine Brennkammer (4) umfasst und das Testverfahren durchgeführt wird, während die Brennkammer (4) in Ruhe ist.

## Claims

1. A system comprising a test stand (1) and an assembly (2, 4) comprising a divergent section (2) of a spacecraft engine,
the assembly having the divergent section comprising a proximal end (41) and a distal end (22),
the test stand (1) comprising a frame (11) provided with means for fastening (12) the proximal end (41) of the assembly comprising the divergent section (2) to the frame (11),
the assembly being **characterized in that** the test stand (1) comprises actuators (3) adapted to locally apply forces on the divergent section (2), said forces simulating flight conditions of the divergent section (2).

2. The system according to claim 1, wherein the actuators (3) are adapted to locally apply forces in a head portion of the divergent section (2), said head portion of the divergent section (2) being adjacent to the distal end (22) of the assembly.

3. The system according to any of claims 1 or 2, wherein said actuators (3) comprise cylinders (31) adapted to exert a tensile force on the divergent section (2) via cables (32).

4. The system according to claim 3, wherein the actuators (3) comprise angle transmissions (33) disposed between the divergent section (2) and the cylinders (31), so that the cables (32) are oriented perpendicular to the surface of application of the forces.

5. The system according to any of claims 1 or 2, wherein said actuators (3) comprise cylinders (31) adapted to exert a compressive force on the divergent section via rigid rods (35).

6. The system according to any of claims 1 to 5, comprising at least a pair of actuators (3a and 3b and/or 3c and 3d) disposed on both sides of an axis (Z-Z) of the divergent section (2) and adapted to apply symmetrical forces with respect to said axis (Z-Z) of the divergent section (2).

7. The system according to any of claims 1 to 5, wherein the actuators (3) are disposed so as to apply asymmetrical forces with respect to an axis (Z-Z) of the assembly comprising the divergent section (2).

8. The system according to any of claims 1 to 7, wherein the actuators (3) are disposed so as to apply forces along an axial direction of the assembly comprising the divergent section (2).

9. A method for testing an assembly comprising a divergent section by means of a system according to any of claims 1 to 8, wherein said assembly comprises a combustion chamber (4), said test method being performed while the combustion chamber (4) is in operation.

10. The method for testing an assembly comprising a divergent section by means of a system according to any of claims 1 to 8, wherein said assembly comprises a combustion chamber (4), said test method being performed while the combustion chamber (4) is stopped.
